# EUROPÄISCHE PATENTANMELDUNG

(11) **EP 2 892 305 A1**
(43) Veröffentlichungstag der Anmeldung: **08.07.2015**
(21) Anmeldenummer: 14194691.3
(22) Anmeldetag: 25.11.2014
(51) Int. Cl.: H05B 33/08, H05B 37/02

(54) **Dimmer**

(30) Priorität: 03.01.2014 DE 102014100040
(71) Anmelder: Insta Elektro GmbH, 58509 Lüdenscheid (DE)
(72) Erfinder: Becker-Hennecke, Ralph, 58239 Schwerte (DE); Neuhaus, Stefan, 44287 Dortmund (DE); Burmann, Christof, 59939 Olsberg (DE)

(57) **Zusammenfassung**

Es wird ein Dimmer zur bedarfsgerechten Beeinflussung von in Gebäuden installierten Leuchtmitteln vorgeschlagen, welcher mit einer Logikeinheit zur Verarbeitung und Aufbereitung von Steuerinformationen versehen ist, wobei die Logikeinheit steuerseitig mit zumindest einer Bedieneinheit und beeinflussungsseitig mit zumindest einem Leuchtmittel in Verbindung steht. Zu dem Zweck, einen Dimmer zu schaffen, welcher die Möglichkeit bietet, auf besonders einfache Art und Weise Anpassungen der Steuerinformationen (Steuerprogramme) aufgrund der Erfassung von lichttechnischen Veränderungen vorzunehmen, um möglichst optimal eine bedarfsgerechte Beeinflussung der angeschlossenen Leuchtmittel (Leuchten, Lampen) zu ermöglichen, weist die Logikeinheit einen Speicher zur veränderbaren Speicherung von leuchtmittelspezifischen Steuerinformationen (Steuerprogrammen) auf, und steht die Logikeinheit mit einem Lichtsensor in Verbindung, der während zumindest eines zumindest teilweise durchgeführten Dimmvorganges die sich dadurch ergebenden lichttechnischen Veränderungen erfasst und diese der Logikeinheit zuführt, wobei die Logikeinheit die durch den Lichtsensor erfassten lichttechnischen Veränderungen zur Anpassung der im Speicher abgelegten Steuerinformationen (Steuerprogramme) heranzieht.

## Beschreibung

Die vorliegende Erfindung geht von einem gemäß Oberbegriff des Hauptanspruches konzipierten Dimmer aus.

Derartige Dimmer sind in der Regel dafür vorgesehen, in Gebäuden installierte Beleuchtungseinrichtungen (Lampen, Leuchten) bedarfsgerecht zu beeinflussen. Solche Beleuchtungseinrichtungen (Lampen, Leuchten) können mit verschiedenartig ausgeführten Leuchtmitteln ausgerüstet sein. Als Beispiel für solche Leuchtmittel sind insbesondere zu nennen Glühlampen, Halogenlampen, Leuchtstofflampen und LED-Lampen. Aus diesem Grund sind auch verschiedenartig arbeitende Dimmer (Phasenanschnitt, Phasenabschnitt, Universal usw.) vorbekannt. Die Bedienung bzw. Betätigung solcher Dimmer kann zum Beispiel durch eine Drehbetätigung, Tastbetätigung, Wischbetätigung und so weiter erfolgen. Es finden sowohl bildschirmgeführte Bedieneinheiten, als auch Bedieneinheiten mit manuellen Betätigungselementen (Drehsteller, Drucktasten, Wipptasten und so weiter) Verwendung. Zur Beeinflussung werden üblicherweise vom Benutzer an den Bedienelementen bzw. an der Bedieneinheit Bediengrößen (Steuerinformationen) eingestellt, die an die zugeordneten Leuchtmittel (Leuchten, Lampen) zu deren bedarfsgerechten Beeinflussung übertragen werden. Die Übertragung kann drahtgebunden oder aber drahtlos zum Beispiel per Funk erfolgen.

Durch die DE 10 2012 101 808 B3 ist ein dem Oberbegriff des Hauptanspruches entsprechender Dimmer bekannt geworden. Dieses auch als Dimmer zu verwendende elektrische Steuermodul ist insbesondere zur bedarfsgerechten Beeinflussung von in Gebäuden installierten Leuchtmitteln (Leuchten, Lampen) vorgesehen. Dieser Dimmer bzw. dieses elektrische Steuermodul weist eine Logikeinheit zur Verarbeitung und Aufbereitung von Steuerinformationen auf, wobei die Logikeinheit steuerseitig mit einer Bedieneinheit und beeinflussungsseitig mit zumindest einem Leuchtmittel (Leuchte, Lampe) in Verbindung steht. Bei diesem Dimmer besteht die Problematik, dass die in der Logikeinheit abgelegten, zur bedarfsgerechten Beeinflussung der anzusteuernden Leuchtmittel vorgesehenen Steuerinformationen fest eingegeben sind, also nachträglich nicht ausgetauscht oder aktualisiert werden können. Heutzutage unterliegen die zur Verwendung in Gebäuden vorgesehenen Leuchtmittel (Leuchten, Lampen) jedoch einer hohen Änderungsgeschwindigkeit, was dazu führen kann, dass bereits in den Markt gelieferte und/oder zukünftig in den Markt zu liefernde Leuchtmittel (Leuchten, Lampen) mittels bereits installierter Dimmer nicht mehr oder zumindest nicht mehr optimal beeinflusst werden können. Das ist der Fall, weil die in der Logikeinheit der Dimmer vorhandenen Steuerinformationen (Steuerprogramm) zur Beeinflussung der Leuchtmittel (Leuchten, Lampen) den gestellten Anforderungen nicht mehr gerecht werden. Insbesondere bei Leuchtmitteln (Leuchten, Lampen) ist zu beobachten, dass diese immer schneller umfangreich überarbeitet oder aber gänzlich durch neuartige ersetzt werden, was dann immer häufiger und folgenschwerer zu der vorbeschriebenen Problematik hinsichtlich einer bedarfsgerechten Ansteuerung führt. Oftmals muss dann der gesamte Dimmer ausgetauscht werden, damit die im Gebäude verbauten Leuchtmittel (Leuchten, Lampen) wieder bedarfsgerecht beeinflusst werden können, was mit einem erheblichen montagetechnischen Aufwand und entsprechend hohen Kosten verbunden ist.

Ausgehend von einem derart ausgebildeten Dimmer liegt der vorliegenden Erfindung die Aufgabe zugrunde, einen Dimmer zu schaffen, welcher die Möglichkeit bietet, auf besonders einfache Art und Weise Anpassungen der Steuerinformationen (Steuerprogramme) aufgrund der Erfassung von lichttechnischen Veränderungen vorzunehmen, um möglichst optimal eine bedarfsgerechte Beeinflussung der angeschlossenen Leuchtmittel (Leuchten, Lampen) zu ermöglichen.

Erfindungsgemäß wird diese Aufgabe durch die im Hauptanspruch angegebenen Merkmale gelöst.

Bei einer solchen Ausbildung ist besonders vorteilhaft, dass zur bedarfsgerechten Ansteuerung von neuartige Anforderungen stellenden Leuchtmitteln (Lampen, Leuchten) lediglich eine Anpassung oder ein Austausch der in der Logikeinheit abgelegten Steuerinformationen (Steuerprogramm) durchzuführen ist, was teilweise automatisch mittels der Durchführung eines kompletten Dimmvorganges bei Erfassung der sich dabei ergebenden lichttechnischen Veränderungen auf besonders einfache Art und Weise erfolgt.

Weitere vorteilhafte Ausgestaltungen des erfindungsgemäßen Gegenstandes sind in den Unteransprüchen angegeben. Anhand eines Ausführungsbeispieles sei die Erfindung im Prinzip näher erläutert. Dabei zeigen:

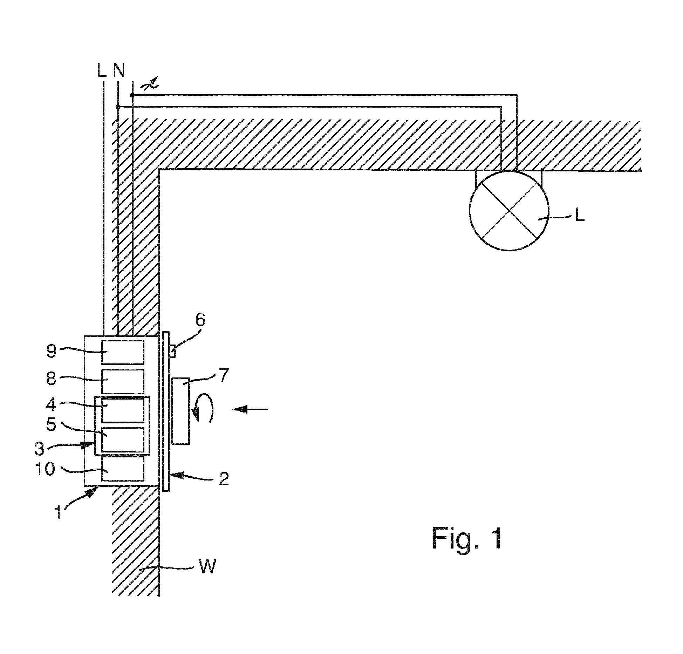

Fig. 1: prinziphaft ein, an einen Dimmer angeschlossenes Leuchtmittel.

Wie aus der Zeichnung hervorgeht, besteht ein derartiger Dimmer zur bedarfsgerechten Beeinflussung von in Gebäuden installierten Leuchtmitteln L (Lampen, Leuchten) hauptsächlich aus einer Unterputzeinheit 1 und einer Aufsatzeinheit 2. Die Unterputzeinheit 1 weist auf, eine Logikeinheit 3, einen Speicher 4 und einen Mikrocontroller 5 zur veränderbaren Speicherung von leuchtmittelspezifischen Steuerinformationen (Steuerprogrammen). Die Logikeinheit 3 steht mit einem Lichtsensor 6 in Verbindung, der während zumindest eines kompletten Dimmvorganges die sich dadurch ergebenden lichttechnischen Änderungen erfasst und diese der Logikeinheit 3 zuführt. Die Logikeinheit 3 verarbeitet die durch den Lichtsensor 6 erfassten lichttechnischen Änderungen und passt gegebenenfalls die im Speicher 4 abgelegten Steuerinformationen (Steuerprogramme) daran an, um möglichst optimal eine bedarfsgerechte Beeinflussung der angeschlossenen Leuchtmittel L (Leuchten, Lampen) zu ermöglichen. Neben der als Dreh-/Drücksteller ausgebildeten Bedieneinheit 7 ist auch der Lichtsensor 6 Bestandteil der Aufsatzeinheit 2.

Wie des Weiteren aus der Zeichnung hervorgeht, ist der Dimmer beim vorliegenden Ausführungsbeispiel an das Versorgungsnetz des Gebäudes angeschlossen und steht beeinflussungsseitig über eine Steuerleitung mit einem Leuchtmittel L in Verbindung. Das Leuchtmittel L ist ebenfalls an das Versorgungsnetz des Gebäudes angeschlossen und im vorliegenden Fall als Leuchte ausgeführt, die mit einer LED-Lampe bestückt ist. Über eine, in der Unterputzeinheit 1 angeordnete Leistungselektronik 8 und ein Netzteil 9 werden die aufbereiteten Steuerinformationen (Steuerprogramme) drahtgebunden an das Leuchtmittel L übertragen, um dieses bedarfsgerecht zu beeinflussen, das heißt, einzuschalten, auszuschalten und/oder durch Dimmen in seiner Helligkeit bedarfsgerecht zu beeinflussen. Beim vorliegenden Ausführungsbeispiel leitet die Logikeinheit 3 die Steuerinformationen an die Leistungselektronik 8 und das Netzteil 9 weiter, um anschließend diese Steuerinformationen (Steuerprogramme) zur bedarfsgerechten Beeinflussung des angeschlossenen Leuchtmittels L zu verwenden.

Soll auf einfache Art und Weise eine Anpassung der Steuerinformationen (Steuerprogramme) an die angeschlossenen Leuchtmittel L durchgeführt werden, wird zunächst das Bedienelement der als Dreh-/Drücksteller ausgebildeten Bedieneinheit 7 für einen Zeitraum von mehr als fünfzehn Sekunden niedergedrückt, um in den Einlernmodus umzuschalten. Anschließend wird vom Benutzer durch Verdrehen des Dreh-/Drückstellers ein kompletter Dimmvorgang durchgeführt, wobei gleichzeitig durch den Lichtsensor 6 die lichttechnischen Änderungen (Helligkeitsänderungen) des an den Dimmer angeschlossenen Leuchtmittels L erfasst werden. Anschließend werden die erfassten lichttechnischen Änderungen (Helligkeitsänderungen) der Logikeinheit 3 zugeführt und unter Zuhilfenahme des Mikrocontrollers 5 aufbereitet. Der Lichtsensor 6 ist beim vorliegenden Ausführungsbeispiel als Kamera ausgeführt. Die bereits im Speicher 4 abgelegten Steuerinformationen (Steuerprogramme) werden dann hinsichtlich eines optimalen Dimmverhaltens angepasst und ersetzen somit die vorher im Speicher 4 abgespeicherten Steuerinformationen (Steuerprogramme). Anschließend erfolgt eine Umschaltung in den normalen Betriebsmodus. Somit bietet der Dimmer auf einfache Art und Weise eine automatische Anpassung der im Speicher 4 abgelegten Steuerinformationen (Steuerprogramme), um möglichst optimal eine bedarfsgerechte Beeinflussung des angeschlossenen Leuchtmittels L zu ermöglichen. Wird das Leuchtmittel L durch den Benutzer ausgetauscht und durch ein anderes (andersartiges) Leuchtmittel L ersetzt, kann durch den vorbeschriebenen Vorgang wiederum automatisch auf einfache Art und Weise eine Anpassung vorgenommen werden, um möglichst optimal eine bedarfsgerechte Beeinflussung des dann zur Verwendung kommenden neuen Leuchtmittels L zu ermöglichen. Es kann somit auch optimal auf den Ersatz von Leuchtmitteln L reagiert werden, die in ihrem Dimmverhalten starke Unterschiede aufweisen. Alternativ und/oder zusätzlich können im Speicher 4 mehrere zum Beispiel zehn verschiedene vorgefertigte Steuerprogramme (Steuerinformationen) hinterlegt sein, die hinsichtlich der bedarfsgerechten Beeinflussung optimal auf verschiedene Leuchtmittel L mit unterschiedlichen Dimmverhalten abgestimmt sind. In diesem Fall ist es dann möglich, nach der Durchführung eines Einlernvorganges durch die Logikeinheit 3 das bestmöglich passende Steuerprogramm (Steuerinformationen) auszusuchen und als das anzuwendende in den Speicher 4 einzuschreiben, um möglichst optimal eine bedarfsgerechte Beeinflussung des aktuell eingebauten Leuchtmittels L vornehmen zu können.

Wie des Weiteren aus der Figur hervorgeht, ist der in einer Wand W des Gebäudes eingebaute Dimmer mit einer Funkeinheit 10 ausgerüstet. Im vorliegenden Fall ist die Funkeinheit 10 in der Unterputzeinheit 1 angeordnet und steht datentechnisch mit der Logikeinheit 3 in Verbindung. Somit ist es möglich, über die Funkeinheit 10 eine bedarfsgerechte Beeinflussung von Leuchtmitteln L vorzunehmen, die nicht leitungsgebunden mit der Logikeinheit 3 in Verbindung stehen. Alternativ zur vorstehend beschriebenen und in Figur 1 dargestellten konventionellen Verdrahtung kann der Dimmer und das Leuchtmittel L auch zur Verwendung in einer Gebäudeinstallation vorgesehen sein, die als zumindest teilweise drahtgebundenes oder zumindest teilweise funkbasiertes Bussystem (KNX) ausgeführt ist. Auch kann das Leuchtmittel (Lampe, Leuchte) direkt mit einem Vorschaltgerät, einem Netzteil und/oder mit einer Leistungselektronik ausgerüstet sein, so dass der Dimmer selbst vergleichsweise einfach aufgebaut sein kann.

Es ist somit ein Dimmer realisiert, der die Möglichkeit bietet, auf besonders einfache Art und Weise Anpassungen der Steuerinformationen (Steuerprogramme) vorzunehmen, um möglichst optimal eine bedarfsgerechte Beeinflussung der angeschlossenen Leuchtmittel L (Leuchten, Lampen) zu ermöglichen. Hierbei ist besonders vorteilhaft, dass zur bedarfsgerechten Ansteuerung von neuartige Anforderungen stellenden Leuchtmitteln L (Lampen, Leuchten) lediglich eine Anpassung oder ein Austausch der in der Logikeinheit 3 abgelegten Steuerinformationen (Steuerprogramme) durchzuführen ist, was teilweise automatisch mittels der Durchführung eines kompletten Dimmvorganges bei Erfassung der sich dabei ergebenden lichttechnischen Veränderungen auf besonders einfache Art und Weise erfolgt.

### Bezugszeichenliste:

- 1.: Unterputzeinheit
- 2.: Aufsatzeinheit
- 3.: Logikeinheit
- 4.: Speicher
- 5.: Mikrocontroller
- 6.: Lichtsensor
- 7.: Bedieneinheit
- 8.: Leistungselektronik
- 9.: Netzteil
- 10.: Funkeinheit

- L: Leuchtmittel (Lampen, Leuchten)
- W: Wand

## Patentansprüche

1. Dimmer zur bedarfsgerechten Beeinflussung von in Gebäuden installierten Leuchtmitteln, welcher mit einer Logikeinheit zur Verarbeitung und Aufbereitung von Steuerinformationen versehen ist, wobei die Logikeinheit steuerseitig mit zumindest einer Bedieneinheit und beeinflussungsseitig mit zumindest einem Leuchtmittel in Verbindung steht, **dadurch gekennzeichnet, dass** die Logikeinheit (3) einen Speicher (4) zur veränderbaren Speicherung von leuchtmittelspezifischen Steuerinformationen (Steuerprogrammen) aufweist, und dass die Logikeinheit (3) mit einem Lichtsensor (6) in Verbindung steht, der während zumindest eines zumindest teilweise durchgeführten Dimmvorganges die sich dadurch ergebenden lichttechnischen Veränderungen erfasst und diese der Logikeinheit (3) zuführt, und dass die Logikeinheit (3) die, durch den Lichtsensor (6) erfassten lichttechnischen Veränderungen zur Anpassung der im Speicher (4) abgelegten Steuerinformationen (Steuerprogramme) heranzieht.

2. Dimmer nach Anspruch 1, **dadurch gekennzeichnet, dass** die Logikeinheit (3) beeinflussungsseitig über ein Bussystem mit zumindest einem Leuchtmittel (L) in Verbindung steht.

3. Dimmer nach Anspruch 1 oder 2, **dadurch gekennzeichnet, dass** die Logikeinheit (3) beeinflussungsseitig über ein Vorschaltgerät mit zumindest einem Leuchtmittel (L) in Verbindung steht.

4. Dimmer nach einem der Ansprüche 1 bis 3, **dadurch gekennzeichnet, dass** die Logikeinheit (3) beeinflussungsseitig über eine Leistungselektronik (8) und ein Netzteil (9) mit zumindest einem Leuchtmittel (L) in Verbindung steht.

5. Dimmer nach einem der Ansprüche 1 bis 4, **dadurch gekennzeichnet, dass** der Lichtsensor (6) als Kamera ausgeführt ist.

6. Dimmer nach einem der Ansprüche 1 bis 5, **dadurch gekennzeichnet, dass** die Logikeinheit (3) mit zumindest einer Funkeinheit (10) in Verbindung steht.

7. Dimmer nach einem der Ansprüche 1 bis 6, **dadurch gekennzeichnet, dass** die Logikeinheit (3) zumindest einen Mikrocontroller (5) aufweist.

8. Dimmer nach einem der Ansprüche 1 bis 7, **dadurch gekennzeichnet, dass** der Dimmer aus einer Unterputzeinheit (1) und einer Aufsatzeinheit (2) besteht, und dass in der Unterputzeinheit (1) zumindest die Logikeinheit (3) untergebracht ist, und dass die Aufsatzeinheit (2) die zumindest eine Bedieneinheit (7) und den zumindest einen Lichtsensor (6) aufweist.

9. Dimmer nach einem der Ansprüche 1 bis 7, **dadurch gekennzeichnet, dass** der Dimmer als Kompaktgerät ausgeführt ist, welches mit zumindest einer Logikeinheit (3), zumindest einer Bedieneinheit (7) und zumindest einem Lichtsensor (6) ausgerüstet ist.

10. Dimmer nach einem der Ansprüche 1 bis 9, **dadurch gekennzeichnet, dass** die Logikeinheit (3) zum Anschluss eines von außen zuzuführenden Speichermediums vorgesehen ist.

11. Dimmer nach einem der Ansprüche 1 bis 10, **dadurch gekennzeichnet, dass** ein Betrieb in einem zumindest teilweise drahtgebundenen Bussystem vorgesehen ist.

12. Dimmer nach einem der Ansprüche 1 bis 11, **dadurch gekennzeichnet, dass** ein Betrieb in einem zumindest teilweise funkbasierten Bussystem vorgesehen ist.

13. Dimmer nach einem der Ansprüche 1 bis 12, **dadurch gekennzeichnet, dass** zumindest ein zu beeinflussendes Leuchtmittel (L) als zumindest eine, in eine Leuchte eingebaute LED-Lampe ausgeführt ist.
